# EUROPÄISCHE PATENTSCHRIFT

(11) **EP 0 629 596 B1**
(45) Veröffentlichungstag und Bekanntmachung des Hinweises auf die Patenterteilung: **09.04.1997**
(21) Anmeldenummer: 94108567.2
(22) Anmeldetag: 03.06.1994
(51) Int. Cl.: C04B 37/02, H01L 41/00, F04B 53/00, F16C 33/00

(54) **Innenlötung bei Metall-Keramik-Verbunden**
Internal joint of metal-ceramic composites
Soudure interne de composites en métal-céramique

(30) Priorität: 12.06.1993 DE 4319533
(43) Veröffentlichungstag der Anmeldung: 21.12.1994
(73) Patentinhaber: CeramTec AG Innovative Ceramic Engineering, 73207 Plockingen (DE)
(72) Erfinder: Do-Thoi, Tha, D-90552 Röthenbach (DE); Meier, Gerd, D-91227 Leinburg (DE); Popp, Klaus, D-90562 Kalchreuth-Röckenhof (DE); Stingl, Peter, Dr., D-91207 Lauf-Kuhnhof (DE)

(56) Entgegenhaltungen:
- EP-A- 0 356 678
- WO-A-92/00936
- US-A- 3 137 545

## Beschreibung

Die Erfindung betrifft einen Verbundkörper, bei dem ein Keramikbauteil mit einem Metallbauteil durch Innenlötung verbunden ist. Die Erfindung betrifft auch das Verfahren zur Herstellung des Verbundkörpers und seine Verwendung.

Keramik wird technisch vielseitig eingesetzt, da dieser Werkstoff sehr hart, widerstandsfähig gegen hohe Temperaturen, korrosionsbeständig und elektrisch isolierend ist. Um sowohl die Vorteile von Metallen als auch von Keramik nutzen zu können, ist es oftmals notwendig, Metall-Keramik-Verbunde herzustellen. Der mechanischen, chemischen und thermischen Beständigkeit der Verbindung zwischen der Keramik und dem Metall kommt dabei eine zentrale Bedeutung bei der Entscheidung über den technischen Einsatz des Verbundes zu.

Aus US-A-3 137 545 ist ein Keramik-Metallverbund bekannt, bei dem eine keramische Scheibe mit einer Öffnung versehen ist, durch die ein Metallstab geführt ist. Die Öffnung ist an einer Seite an ihrer Kante mit einer Fase versehen. Auf der Öffnung liegt ein Hartlotring. Während des Lötvorgangs fließt das Lot in den Raum zwischen Metallstab und Öffnung.

Infolge der werkstofflichen Unterschiede der Fugepartner bereitet das Verbinden von Keramikteilen mit Metallen prinzipiell große Schwierigkeiten, insbesondere beim Innenlöten, bei dem in einer Ausnehmung innerhalb eines Bauteiles des einen Materials ein paßgenau geformtes Bauteil des anderen Materials angeordnet und dort mit Hilfe von Lötmasse unter thermischer Einwirkung dauerbeständig festhaftend fixiert werden soll. Aufgrund der Unterschiede der Werkstoffkennwerte der beiden Materialien wie Elastizitätsmodul, Streckgrenze R_{P}, Querkontraktionszahl (ν) und vor allem dem linearen Wärmeausdehnungskoeffizienten (α) treten unter den Lötbedingungen komplexe Fügespannungen im Verbund auf, insbesondere an den Werkstoffübergängen Keramik/Lotmasse oder Lötmasse/Metall oder Keramik/Metall.

Selbst bei der Auswahl von Materialien mit weitestmöglich angepaßtem Ausdehnungsverhalten, beispielsweise Al₂O₃-Keramik in Verbindung mit FeNiCo-Legierungen (®Vacon) treten gleichwohl im Verbund thermisch induzierte Eigenspannungen auf, die bei mechanischer Belastung Ursache von frühzeitiger Ermüdung sind. Als Ursache dafür wird der deutlich höhere thermische Wärmeausdehnungskoeffizient (α) der Silber/Kupfer Lötmasse gegenüber Al₂O₃ und Vacon angenommen. In Tabelle 1 sind zur Veranschaulichung die aus Literatur- und Herstellerangaben entnommenen Materialdaten bei der Erstarrungstemperatur des Lotes (780 °C) enthalten.

**Tabelle 1**

| Materialdaten für Vacon, Al₂O₃ und Ag-Cu-Lötmasse bei 780 °C. | | | | |
|---|---|---|---|---|
| Materialien | α [·10⁻⁶·K⁻¹] | E-Modul [·10⁵ MPa] | R_{P} [MPa] | ν |
| Vacon-FeNiCo-Leg. (W.-Nr. 1.3981) | 8,3 | 1,3 | 100 | 0,3 |
| Keramik Al₂O₃ | 8,1 | 3,5 | -/- | 0,23 |
| Ag-Cu-Eutektikum-Hartlot | 18,9 | 0,22 | 25 | 0,3 |

Als Folge der thermisch induzierten Eigenspannungen versagt die Verbindung der in der Tabelle aufgeführten Materialien unter Umständen schon während der Abkühlphase ohne äußere Belastung durch Rißbildung in der spröden Keramik in unmittelbarer Nähe der Werkstoffübergänge.

Die Aufgabe der vorliegenden Erfindung ist die Schaffung eines Verbundes, bei dem die thermischen Spannungen zwischen der Keramik und der Lötmasse beim Innenlöten minimiert oder möglichst völlig vermieden werden und der auf einfache Weise und unter normalen Lötbedingungen durch Innenlöten rißfrei herzustellen ist.

Diese Aufgabe wird erfindungsgemäß durch einen Verbundkörper der eingangs genannten Gattung gelöst, dessen kennzeichnende Merkmale darin zu sehen sind, daß die Innenlötung in einer Ausnehmung innerhalb eines Bauteiles des einen Materials, in der ein paßgenau geformtes Bauteil des anderen Materials angeordnet ist, mit Lötmasse bewirkt ist, daß die Ausnehmung an wenigstens einer stirnseitigen Öffnung von einer Fase umgeben ist, deren Winkel kleiner als 35 ° ist, vorzugsweise kleiner als 20 °, und daß der Benetzungswinkel β zwischen der Lötmasse und der Ebene der Bauteiloberfläche, in der sich die Ausnehmung befindet, kleiner als 40 ° ist, vorzugsweise kleiner als 20 °.

Als Keramikkörper sind im Rahmen der vorliegenden Erfindung Körper aus oxidischer wie nichtoxidischer Keramik geeignet. Als oxidische Keramik kommen vorwiegend Zirkonoxid und Aluminiumoxid in Frage, vorzugsweise Al₂O₃-Keramikkörper mit einem Gehalt von mindestens 80 Gew.-%, vorzugsweise mindestens 94 Gew.-% Al₂O₃, während als nichtoxidische Keramik Siliziumcarbid, siliziuminfiltriertes Siliziumcarbid, Siliziumnitrid oder Aluminiumnitrid geeignet sind.

Die Keramik ist im Bereich der Kontaktfläche der Ausnehmung und ggf. auch der Fase metallisiert. Die Metallisierung erfolgt nach dem bekannten Molybdän/Mangan oder Wolfram/Titan-Metallisierungsverfahren. Die entstehende dünne Schicht mit einer Dicke im Bereich von 2 bis 30 µm wird in feuchter, reduzierender Atmosphäre bei Temperaturen von 1200 °C bis 1500 °C eingebrannt. Auf diese Weise läßt sich eine gute Haftung zwischen Keramikgrundwerkstoff und Metallisierung erreichen. Anschließend wird galvanisch oder chemisch auf die Metallisierungsschicht noch ein Nickelüberzug aufgetragen. Der Überzug aus Nickel besitzt zweckmäßigerweise etwa eine Dicke im Bereich von 0,5 bis 5 µm und hat die Funktion, die Benetzung der metallisierten Keramik durch das geschmolzene Lot zu erleichtern.

Das Verbinden von Keramik mit Metall kann außer nach dem oben erwähnten Metallisierungsverfahren auch mit einer anderen Verbindungstechnik, beispielsweise Löten mit Aktivloten, erfolgen. Beim Löten mit Aktivoten kann auf die Metallisierung der Keramik verzichtet werden. Beim konventionellen Lötverfahren hingegen werden Lotmaterialien auf Silber-Kupfer-Basis in Form von Lotformteilen oder Lotpasten verwendet. Erfindungsgemäß haben sich Überzüge von Silber-Kupfer-Loten mit einem Kupfergehalt im Bereich von 10 bis 80 Gew.-%, vorzugsweise von 15 bis 60 Gew.-%, bezogen auf das Gesamtgewicht von Silber und Kupfer, oder Silber-Kupfer-Lote mit einem oder mehreren anderen Elementen wie Zn, Sn Cd, Pd, Mn, Ni, Au, Si, In, Pt, Ti, Hf in der Praxis am besten bewährt. Der Lotbrand erfolgt bevorzugt im Vakuum oder unter Schutzgasatmosphäre.

Das Attribut paßgenau bedeutet im Rahmen der vorliegenden Erfindung, daß das in der Ausnehmung angeordnete Bauteil hinsichtlich seiner äußeren Geometrie der inneren Geometrie der Ausnehmung angepaßt ist. Es kann zylindrisch, konisch, rohr-, quader- oder stabförmig oder von anderer Geometrie sein und es kann gegebenenfalls einen Wulst enthalten. Das Baute ragt zweckmäßigerweise mindestens 1 mm tief in die Ausnehmung hinein, wobei der Bereich der Fase nicht mitberücksichtigt ist.

Das Anbringen der Lotmasse aus Kupfer und Silber an das Bauteil, das in der Ausnehmung angeordnet ist, geschieht vorteilhaft nach dem Verfahren gemäß EP-A-356 678. Das Anbringen der Schichten erfolgt vorzugsweise nach dem galvanischen Verfahren, andere Beschichtungstechniken sind jedoch nicht ausgeschlossen.

Die Dicke der Lotschicht, die dem Lotspalt entspricht, ist direkt proportional zu dem Durchmesser der Ausnehmung. Bei Ausnehmungen mit besonders großem Durchmesser bis zu 15 mm sind Lotschichten mit einer Dicke von bis zu 100 µm zweckmäßig, während sich bei Ausnehmungen mit kleinerem Durchmesser von 0,5 bis 3 mm Lotschichten und Spaltbreiten im Bereich von 20 bis 50 µm besser bewährt haben. Unter Lötbedingungen bilden sich zwischen den abgeschiedenen Lotschichten und der vorzugsweise vorhandenen Metallisierung festhaftende Verbindungen aus.

Mit dem beschriebenen Beschichtungsverfahren wird eine gleichmäßige, gleichbleibende Dicke der abgeschiedenen Schichten auf dem zur Anordnung in der Ausnehmung vorgesehenen Bauteil gewährleistet. Die Lötmasse wird vorzugsweise im Überschuß aufgetragen, womit nicht gemeint ist, daß Schichten mit größerer Schichtdicke aufgetragen werden, sondern daß ein Oberflächenbereich des Bauteils mit Lötmasse überzogen wird, der größer ist als der Bereich, der durch die Innenlötung mit der Innenwandung der Ausnehmung des anderen Bauteils verbunden ist. Die überschüssige Lötmasse kann während der thermischen Behandlung in den Spalt zwischen den beiden Bauteilen eindringen und insbesondere im Bereich der Fase der Ausnehmung einen Wulst bilden, an dem sich ein Benetzungswinkel im erfindungsgemäßen Bereich einstellt.

Aufgrund der beträchtlichen Unterschiede in den thermischen Ausdehnungskoeffizienten zwischen Keramik und Lötmasse, die in Tabelle 1 anschaulich zum Ausdruck kommen, zieht sich die Lötmasse beim Abkühlen sehr viel mehr zusammen als die Keramik. Dadurch entstehen an der Grenzfläche Keramik/Lot, insbesondere wenn die Keramik als Außenteil eingesetzt wird, mechanische Spannungen, die an der Stelle am größten sind, wo das Lot, das den Lotspalt und die Fase ausfüllt, an der Keramik endet und dort den Benetzungswinkel β zwischen der Oberfläche der Lötmasse und der Ebene der Oberfläche des Bauteils, innerhalb dem die Ausnehmung angeordnet ist, bildet. Diese Stelle wird auch Ansatzpunkt genannt. Da die spröde Keramik wegen ihrer mangelnden plastischen Verformbarkeit nicht in der Lage ist, Spannungen abzubauen, entstehen Risse in der Keramik. Untersuchungen zeigen, daß der Ansatzpunkt in der Mitte der Fase des Bauteils am Rand zur Innenlötung in Bezug auf Spannungsüberhöhungen und damit einhergehend Rißbildung am ungünstigsten ist.

In einer weiteren Ausführungsform der Erfindung ist nicht nur die Innenwandung der Ausnehmung und die Fase metallisiert beziehungsweise mit Lötmasse benetzt, sondern im Fall von nicht durchgängigen Ausnehmungen auch das innenliegende Ende am Boden der Ausnehmung. Durch diese Maßnahme wird eine Verlagerung der thermischen Spannungen von dem duktilen Lot in die spröde, bruchempfindliche Keramik weitestgehend vermieden.

In der Praxis leistet diese konstruktive Maßnahme einen großen Beitrag beim Herstellen von rißfreien Metall-Keramik-Verbunden, auch bei schnellem Abkühlen.

### Ausführungsbeispiel:

Ein Keramikkörper aus Al₂O₃ mit einer Dicke von 3 mm ist mit einer durchgängigen Bohrung versehen. Der Durchmesser der Bohrung beträgt 1 mm und sie hat eine Länge von 3 mm. An den beiden Kanten des Randbereiches des Keramikkörpers wird eine 15°-Fase mit einer Fasenbreite von 0,4 mm angebracht, welche am Rand der Innenlötung beispielsweise durch Nachscheuern verrundet ist. Die Innenseite der Bohrung des Keramikkörpers wird danach über ihre gesamte Länge inklusive der Fase nach üblichen Verfahren mit W/TiO₂ und Nickel metallisiert (Schichtdicke W/TiO₂: 10 µm, Schichtdicke Nickel: 1,8 µm). In der Bohrung wird ein runder Metallstift, der über seine gesamte Länge mit integriertem Lot aus einer Kupfer-Silber-Legierung mit einem Kupferanteil von 28 Gew.-% und einem Silberanteil von 72 Gew.-% (Lotdicke: 15 µm) überzogen ist, montiert und mit Hilfe der Lötlehre exakt zentriert. Lötlehre einschließlich metallisierter Keramik und Metallstift mit integriertem Lot werden im Vakuum auf eine Temperatur zwischen 810 und 830 °C aufgeheizt. Bei der Löttemperatur werden Metall- wie Keramikoberfläche von dem geschmolzenen Lot benetzt. Das nach der Abkühlung erstarrte Lot bildet einen Benetzungewinkel von 30 ° und bewirkt eine haftfeste und gas- bzw. vakuumdichte Verbindung zwischen dem Metallstift und dem Keramikkörper. Die Querschliffe zeigen einen rißfreien Metall-Keramik-Verbund.

Mit einer Zugspannungsmeßvorrichtung wurde der so hergestellte Verbund geprüft und es wurde eine Abreißkraft von 350 N gemessen (vergleichbar mit der Zugfestigkeit des ®Vacon-Stahles). Der Bruch erfolgte nicht an der Löt- bzw. Verbindungsstelle, sondern im Metallstift selbst.

Anhand der beigefügten Zeichnungen soll nachfolgend die Erfindung für den Fachmann noch anschaulicher erläutert werden.

Figur 1 zeigt im vertikalen Längsschnitt einen erfindungsgemäßen Verbundkörper aus Metall und Keramik.

Figur 2 zeigt eine vergrößerte Darstellung im Bereich II der Figur 1.

Figur 3 zeigt im vertikalen Längsschnitt einen Verbundkörper aus Metall und Keramik nach dem Stand der Technik.

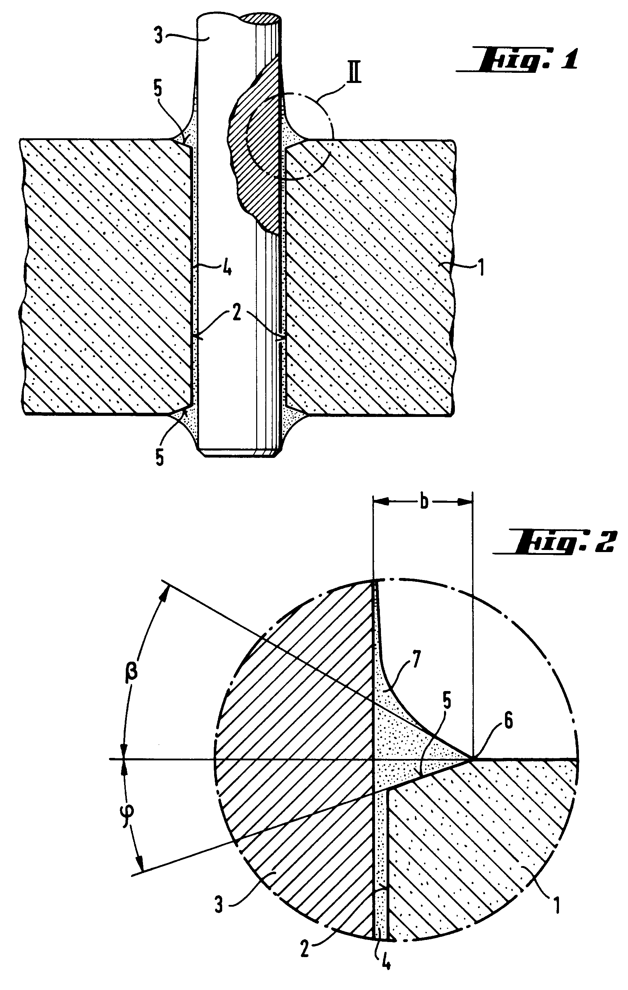

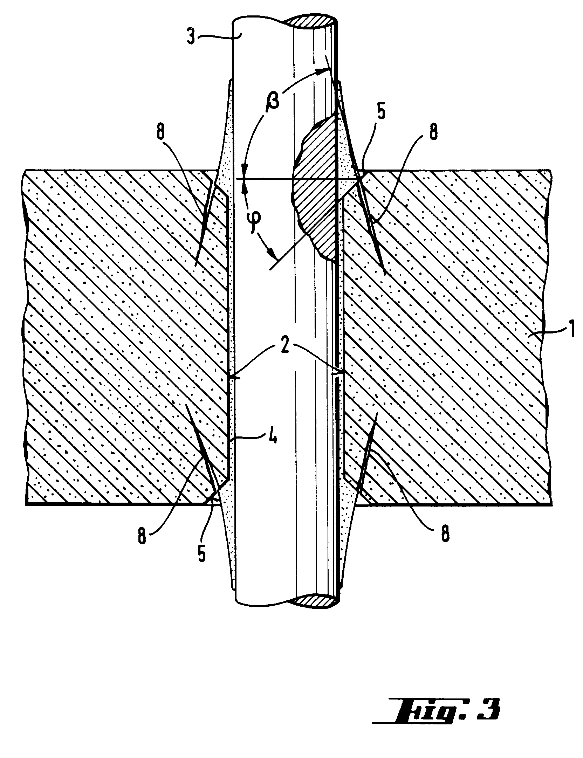

In Figur 1 ist ein keramischer Werkstoff 1 erkennbar, der eine durchgängige Ausnehmung 2 besitzt. Innerhalb der Ausnehmung 2 ist paßgenau ein metallischer Stift 3 angeordnet und durch Innenlötung 4 mit dem keramischen Werkstoff 1 verbunden. In der vergrößerten Darstellung der Figur 2 ist der Winkel ϕ der Fase 5, der Benetzungswinkel β und die Fasenbreite b erkennbar. Der Ansatzpunkt 6 fällt auf den äußersten Durchmesser der Fase 5, welche somit vollständig über ihre gesamte Breite b mit Lot benetzt wird. Durch Überschußvorbelotungstechnik wird das Überschußlotangebot 7 so abgestimmt, daß dadurch der Benetzungswinkel β möglichst klein gehalten wird. Der durch den Winkel ϕ der Fase 5 und den Benetzungswinkel β definierte Lotquerschnitt leitet die Lotschrumpfkräfte homogen und großflächig über die gesamte Breite b der Fase 5 in den Keramikkörper 1 ab.

In Figur 3 haben gleiche Bezugszeichen gleiche Bedeutung wie in Figur 1 und Figur 2. Es ist jedoch erkennbar, daß der Ansatzpunkt 6 in der Mitte der Fase 5 liegt und daß der Benetzungswinkel β zu groß ist, sodaß Risse 8 entstehen, die zur Unbrauchbarkeit des Verbundkörpers führen.

Der erfindungsgemäße Verbundkörper läßt sich vorteilhaft als Durchführung, Gleichrichtergehäuse, Dicht-, Gleit- und Lagerelement, Piezoelement, Pumpenkolben, Thyristorgehäuse, Überspannungsableiter, Vakuumkammer, Schaltrohr, Zündelement, Diode, Rock-Top, Distanzstück für chemisch, mechanisch und/oder thermisch belastete Bauteile verwenden.

## Patentansprüche

1. Verbundkörper, bei dem ein Keramikbauteil mit einem Metallbauteil durch Innenlötung verbunden ist, dadurch gekennzeichnet, daß die Innenlötung in einer Ausnehmung innerhalb eines Bauteiles des einen Materials, in der ein paßgenau geformtes Bauteil des anderen Materials angeordnet ist, mit Lötmasse bewirkt ist, daß die Ausnehmung an wenigstens einer stirnseitigen Öffnung von einer Fase umgeben ist, deren Winkel kleiner als 35 ° ist, vorzugsweise kleiner als 20 °, und daß der Benetzungswinkel β zwischen der Lötmasse und der Ebene der Bauteiloberfläche, in der sich die Ausnehmung befindet, kleiner als 40 ° ist, vorzugsweise kleiner als 20 °.

2. Verbundkörper nach Anspruch 1, dadurch gekennzeichnet, daß das Keramikbauteil als oxidische Keramik Zirkonoxid oder Aluminiumoxid enthält, vorzugsweise Al₂O₃ mit einem Gehalt von mindestens 80 Gew.-%, vorzugsweise mindestens 94 Gew.-% an Al₂O₃, oder als nichtoxidische Keramik SiC, SiSiC, Si₃N₄, oder AlN.

3. Verbundkörper nach Anspruch 1 oder 2, dadurch gekennzeichnet, daß ein Keramikbauteil mit einer Ausnehmung versehen ist, wobei im Bereich der Kontaktfläche der Ausnehmung und gegebenenfalls auch der Fase eine Metallisierung aufgebracht ist.

4. Verbundkörper nach Anspruch 3, dadurch gekennzeichnet, daß auf der Metallisierungsschicht noch ein Nickelüberzug aufgetragen ist, der eine Dicke im Bereich von 0,5 bis 5 µm besitzt.

5. Verbundkörper nach einem der Ansprüche 1 bis 4, dadurch gekennzeichnet, daß die Lötmasse eine Kupfer-Silber-Legierung mit einem Kupfergehalt im Bereich von 10 bis 80 Gew.-%, vorzugsweise von 15 bis 60 Gew.-%, bezogen auf das Gesamtgewicht von Silber und Kupfer, enthält, wobei zusätzlich noch eines oder mehrere Elemente wie Zn, Sn, Cd, Pd, Mn, Ni, Au, Si, In, Pt, Ti oder Hf in der Lötmasse enthalten sein können.

6. Verfahren zum Herstellen eines Verbundkörpers nach einem der Ansprüche 1 bis 5, bei dem im Innern einer Ausnehmung in einem Bauteil aus Keramik ein mit Lötmasse überzogenes paßgenaues Bauteil aus Metall angeordnet wird und anschließend thermisch behandelt wird, dadurch gekennzeichnet, daß die thermische Behandlung bei Temperaturen im Bereich von 600 bis 1300 °C, vorzugsweise von 750 bis 850 °C, im Vakuum oder unter Schutzgasatmosphäre erfolgt.

7. Verfahren nach Anspruch 6, dadurch gekennzeichnet, daß das Anbringen der Lotmasse aus Kupfer und Silber an das Bauteil, das in der Ausnehmung angeordnet ist, nach dem galvanischen Verfahren erfolgt.

8. Verfahren nach Anspruch 6 oder 7, dadurch gekennzeichnet, daß die Lotschicht, welche auf dem in der Ausnehmung angeordneten Bauteil angeordnet ist, in einer Dicke von weniger als 100 µm, vorzugsweise weniger als 50 µm, besonders bevorzugt weniger als 25 µm, aufgetragen wird.

9. Verwendung eines Verbundkörpers nach einem der Ansprüche 1 bis 5 als Durchführung, Gleichrichtergehäuse, Dicht-, Gleit- und Lagerelement, Piezoelement, Pumpenkolben, Thyristorgehäuse, Überspannungsableiter, Vakuumkammer, Schaltrohr, Zündelement, Diode, Rock-Top oder als Distanzstück für chemisch, mechanisch und/oder thermisch belastete Bauteile.

## Claims

1. A composite body in which a ceramic component is bonded to a metal component by internal soldering wherein the internal soldering is effected with soldering composition in a recess within a component of the one material in which there is arranged a component of the other material which is shaped to fit accurately, the recess is, at at least one end-face opening, surrounded by a chamfer having an angle smaller than 35°, preferably smaller than 20°, and the wetting angle β between the soldering composition and the plane of the component surface in which the recess is located is smaller than 40°, preferably smaller than 20°.

2. A composite body as claimed in claim 1, wherein the ceramic component comprises, as oxidic ceramic, zirconium oxide or aluminum oxide, preferably Al₂O₃ containing at least 80 % by weight, preferably at least 94 % by weight, of Al₂O₃, or, as nonoxidic ceramic, SiC, SiSiC, Si₃N₄ or AlN.

3. A composite body as claimed in claim 1 or 2, wherein a ceramic component is provided with a recess, metallization being applied in the region of the contact surface of the recess and, if desired, also on the chamfer.

4. A composite body as claimed in claim 3, wherein the metallization layer has applied to it an additional nickel coating which possesses a thickness in the range from 0.5 to 5 µm.

5. A composite body as claimed in any one of claims 1 to 4, wherein the soldering composition comprises a copper/silver alloy having a copper content in the range from 10 to 80 % by weight, preferably from 15 to 60 % by weight, based on the total weight of silver and copper, where one or more elements such as Zn, Sn, Cd, Pd, Mn, Ni, Au, Si, In, Pt, Ti or Hf can be additionally present in the soldering composition.

6. A process for producing a composite body as claimed in any one of claims 1 to 5, in which an accurately fitting metal component coated with soldering composition is arranged inside a recess in a ceramic component and is subsequently thermally treated, which comprises carrying out the thermal treatment at temperatures in the range from 600 to 1300°C, preferably from 750 to 850°C, in vacuo or under a protective gas atmosphere.

7. The process as claimed in claim 6, wherein the application of the solder composition of copper and silver to the component arranged in the recess is carried out by the electrolytic method.

8. The process as claimed in claim 6 or 7, wherein the layer of solder which is arranged on the component arranged in the recess is applied in a thickness of less than 100 µm, preferably less than 50 µm, particularly preferably less than 25 µm.

9. Use of a composite body as claimed in any one of claims 1 to 5 as a duct, rectifier housing, seal, sliding element, bearing element, piezoelectric element, pump piston, thyristor housing, surge arresters, vacuum chamber, switching tube, ignition element, diode, rock top or spacer block for components subjected to chemical, mechanical and/or thermal stresses.

## Revendications

1. Corps composite, dans lequel un composant céramique est relié par brasage interne à un composant métallique, caractérisé en ce que le brasage interne est réalisé, dans un évidement situé à l'intérieur d'un composant formé d'un matériau, dans lequel est disposé un composant de l'autre matérieau ayant une forme adaptée de façon précise, avec une masse de brasure, que l'évidement est entouré, au niveau d'au moins une ouverture frontale, par un biseau, dont l'angle est inférieur à 35° et de préférence est inférieur à 20° et que l'angle de mouillage β entre la masse de brasure et le plan de la surface du composant, dans laquelle est située l'ouverture, est inférieur à 40° et de préférence inférieur à 20°.

2. Corps composite selon la revendication 1, caractérisé en ce que le composant céramique contient, en tant que céramique à base d'oxyde, de l'oxyde de zirconium ou de l'oxyde d'aluminium, de préférence du Al₂O₃ ayant une teneur égale à au moins 80% en poids et de préférence à au moins 94% en poids de Al₂O₃, ou sous la forme d'une céramique non à base d'oxyde, à savoir SiC, SiSiC, Si₃N₄ ou AlN.

3. Corps composite selon la revendication 1 ou 2, caractérisé en ce qu'un composant céramique est pourvu d'un évidement, une métallisation étant disposée dans la zone de la surface de contact de l'évidement et éventuellement également du biseau.

4. Corps composite selon la revendication 3, caractérisé en ce qu'un revêtement de nickel, qui possède une épaisseur dans la gamme de 0,5 à 5 µm, est en outre déposé sur la couche de métallisation.

5. Corps composite selon l'une des revendications 1 à 4, caractérisé en ce que la masse de brasure contient un alliage cuivre - argent possédant une teneur en cuivre dans la gamme de 10 à 80% en poids et de préférence de 15 à 60% en poids, rapportés au poids total d'argent et de cuivre, auquel cas en outre un ou plusieurs éléments tels que Zn, Sn, Cd, Pd, Mn, Ni, Au, Si, In, Pt, Ti ou Hf peuvent être contenus en supplément dans la masse de brasure.

6. Procédé pour fabriquer un corps composite selon l'une des revendications 1 à 5, selon lequel on dispose à l'intérieur d'un évidement aménagé dans un composant en céramique, un composant formé d'un métal, qui est ajusté de façon précise et est recouvert par une masse de brasure, et qu'on lui applique ensuite un traitement thermique, caractérisé en ce que le traitement thermique s'effectue à des températures dans la gamme de 600 à 1300°C et de préférence de 750 à 850°C, sous vide ou dans une atmosphère de gaz protecteur.

7. Procédé selon la revendication 6, caractérisé en ce que le dépôt de la masse de brasure formée de cuivre et d'argent sur le composant qui est disposé dans l'évidement, s'effectue selon le procédé galvanique.

8. Procédé selon la revendication 6 ou 7, caractérisé en ce que la couche de brasure, qui est disposée sur le composant situé dans l'évidement, est déposée sur une épaisseur inférieure à 100 µm et de préférence inférieure à 50 µm et, d'une manière particulièrement préférentielle, inférieure à 25 µm.

9. Utilisation d'un corps composite selon l'une des revendications 1 à 5, en tant que traversée, boitier de redresseur, élément d'étanchéité, élément coulissant et élément de palier, élément piézoélectrique, piston de pompe, boîtier de thyristor, dispositif de dérivation des surtensions, chambre à vide, tube interrupteur, élément d'amorçage, diode, Rock-Top ou en tant qu'entretoise pour des composants soumis à une contrainte chimique, mécanique et/ou thermique.
